(19) **Europäisches Patentamt / European Patent Office / Office européen des brevets**

(11) **EP 0 982 579 B1**

(12) **EUROPEAN PATENT SPECIFICATION**

(45) Date of publication and mention
of the grant of the patent:
**30.05.2007 Bulletin 2007/22**

(21) Application number: **98907249.1**

(22) Date of filing: **16.03.1998**

(51) Int Cl.:
**G01M 13/04** (2006.01)

(86) International application number:
**PCT/JP1998/001103**

(87) International publication number:
**WO 1999/047904 (23.09.1999 Gazette 1999/38)**

(54) **DEVICE FOR INSPECTING BEARINGS OF MAIN MOTORS OF ROLLING STOCK**

VORRICHTUNG ZUR PRÜFUNG DER HAUPTMOTORENLAGER IN SCHIENENFAHRZEUGEN

DISPOSITIF POUR INSPECTER LES PALIERS DES MOTEURS PRINCIPAUX DES VEHICULES A RAILS

(84) Designated Contracting States:
**CH DE ES FR GB IT LI SE**

(43) Date of publication of application:
**01.03.2000 Bulletin 2000/09**

(73) Proprietor: **Central Japan Railway Company**
**Nagoya-shi,**
**Aichi 450-0002 (JP)**

(72) Inventors:
• **SUZUKI, Hiroyuki**
**Central Japan Railway Company**
**Nagoya-shi**
**Aichi 450-0002 (JP)**
• **SAKAI, Hiromitsu**
**Central Japan Railway Company**
**Nagoya-shi**
**Aichi 450-0002 (JP)**
• **ARIGA, Tatsuya**
**Central Japan Railway Company**
**Nagoya-shi**
**Aichi 450-0002 (JP)**
• **UCHIDA, Mitsunori**
**Central Japan Railway Company**
**Nagoya-shi**
**Aichi 450-0002 (JP)**
• **IKEDA, Shinichi**
**Central Japan Railway Company**
**Nagoya-shi**
**Aichi 450-0002 (JP)**

• **YAJIMA, Kazuki**
**Central Japan Railway Company**
**Nakamura-shi**
**Aichi 450-0002 (JP)**

(74) Representative: **Eisele, Otten, Roth & Dobler**
**Karlstrasse 8**
**88212 Ravensburg (DE)**

(56) References cited:
GB-A- 2 269 638     JP-A- 3 291 539
JP-A- 54 104 883    JP-A- 55 138 634
JP-A- 62 058 133    JP-B2- 61 012 596
JP-U- 60 083 928    US-A- 3 183 500
US-A- 4 366 544     US-A- 4 620 185

• PATENT ABSTRACTS OF JAPAN vol. 012, no. 149 (M-694), 10 May 1988 (1988-05-10) -& JP 62 270820 A (NIPPON KOKAN KK <NKK>), 25 November 1987 (1987-11-25)
• PATENT ABSTRACTS OF JAPAN vol. 003, no. 127 (E-146), 23 October 1979 (1979-10-23) -& JP 54 104883 A (HITACHI LTD), 17 August 1979 (1979-08-17)
• PATENT ABSTRACTS OF JAPAN vol. 006, no. 053 (P-109), 8 April 1982 (1982-04-08) & JP 56 166444 A (TOSHIBA CORP), 21 December 1981 (1981-12-21)
• PATENT ABSTRACTS OF JAPAN vol. 016, no. 201 (P-1352), 14 May 1992 (1992-05-14) & JP 04 032737 A (KOYO SEIKO CO LTD; others: 01), 4 February 1992 (1992-02-04)

## Description

TECHNICAL FIELD

This invention relates to a bearing inspection device and method used to inspect a railroad main motor, and more specifically to a bearing inspection device which can detect a defect of a bearing without disassembling the above-mentioned main motor.

BACKGROUND ART

Conventionally, a railroad main motor is removed from a vehicle after having been used for a certain period of time, and inspection is carried out to check if a bearing or other part of the motor has any defect such as damage and abrasion. This inspection is generally conducted after the main motor is disassembled. The damage and abrasion of the bearing are visually found by an inspector in charge. The typical defects found through the inspection include bruise caused by collision with other objects, a press mark left after engagement with other objects, electrocorrosion caused due to discharge, and other abrasion. If any concave or convex surface which is not formed on a new bearing part, a hazy surface of a bearing part due to electrocorrosion, or abrasion exceeding the allowable limit is found, the main motor is re-assembled with a replaced new bearing and is again mounted on the railway vehicle.

The above-mentioned inspection method, however, has a drawback as requiring a lot of time and labor both for disassembling the main motor and for re-assembling the same. Moreover, it is possible that the inspection itself is a cause for a defect of a bearing. On re-assembling, for example, bruise which is not found before the inspection may be given to a bearing part. Furthermore, since the inspection is visually performed, the possibility of oversight of a defect cannot be perfectly eliminated. On the contrary, if a bearing looks defective in appearance but substantially has no problem, such a bearing part will be replaced. Accordingly, the cost for unnecessary replacement is needed.

US 4 366 544 shows that a vibration detector may be used to extract a certain value of vibration, e.g. an effective value, and a determination unit may be used to determine a defect on the bearing. US 4 620 185 shows that the lubricant is monitored to determine the presence of abnormal levels. Moreover, GB 2 269 638 A shows that the lubricating substance is analysed during the movement of rolling parts.

Therefore, it is an object of the present invention to present a bearing inspection device which can detect a defect of a bearing of a railroad main motor without disassembling the main motor so as to reduce the labor and time required for disassembling and assembling the main motor and to prevent damages given to the bearing part on disassembly and assembly. Additionally, it is another object of the present invention to provide a bearing inspection device enabled to find a defect which may be missed through visual inspection. Furthermore, it is another object of the invention to present a bearing inspection device which can detect a defective bearing substantially requiring replacement despite its appearance.

DISCLOSURE OF THE INVENTION

The invention relates to a bearing inspection device and method as defined in claims 1 and 14 respectively. In a first embodiment, the bearing inspection device is characterized by comprising a vibration detector enabled to output an electric signal indicating a vibration of said bearing, a vibration analysis unit for converting the electrical signal output from said vibration detector into time-domain data to extract an effective value of said vibration, and a determination unit for comparing said effective value extracted by said vibration analysis unit when said main motor is rotationally driven at a predetermined specific revolution with a predetermined reference value to decide whether said bearing is defective or not from the result of comparison.

There is no limitation on the vibration detector if it can convert a vibration into an electric signal such as a vibration acceleration sensor and a vibration sensor of a velocity detection type or a displacement detection type. The vibration analysis unit is a known device which applies signal processing such as amplification processing and filter processing on the electric signal input from the vibration detector to extract the signal element showing the vibration of the bearing and analyzes the waveform or the frequency of the vibration. The determination unit performs various data processing based on the analysis data obtained from the vibration analysis unit. The determination unit can be constructed with a known computer system, for example.

In the bearing inspection device thus structured, a vibration converted into an electric signal by the vibration detector is input into the vibration analysis unit, where waveform processing for removing a noise element caused by a vibration or other of some part other than the bearing is executed by means of known signal processing technique in order to extract the effective value of the vibration of the bearing. The effective value extracted here is one of the data which represent the vibrational level of the bearing itself. The greater the vibration of the bearing is, the larger the effective value becomes. Accordingly, if the effective value of the vibration is larger than a certain reference value, it is considered that a vibration exceeding the allowable limit is being generated. The determination unit thus compares the effective value of the vibration actually measured with the reference value, and decides whether said bearing is defective or not based on the result of the comparison. The effective value of the vibration around the allowable limit is selected as the reference value, based on which it is determined whether a generated vibration exceeds the allowable limit. Such a reference value may be a value statistically calculated from a number of samples, or a theoretical value obtained through analysis using a model.

According to this bearing inspection device, whether the bearing is defective or not can be determined by checking if a generated vibration exceeds the allowable limit. Therefore, a defect of the bearing of the railroad main motor can be detected without disassembling the main motor. As a result, the labor and time required for disassembling and assembling the main motor can be reduced, and also damages given to the bearing part on disassembly and assembly can be prevented. Moreover, different from visual inspection, the problem that a vibration is substantially generated can be perfectly detected.

In a second embodiment, the bearing inspection device is characterized by comprising a vibration detector enabled to output an electric signal indicating a vibration of said bearing, a vibration analysis unit for converting the electric signal output from said vibration detector into time-domain data to extract a maximum value of said vibration, and a determination unit for comparing said maximum value extracted by said vibration analysis unit when said main motor is rotationally driven at a predetermined specific revolution with a predetermined reference value to decide whether said bearing is defective or not from the result of comparison.

This bearing inspection device has the same structure but utilizes the maximum value of the vibration of the bearing as criteria for determination. The maximum value of the vibration is also one of the data which represent the vibrational level of the bearing itself. The greater the vibration is, the larger the maximum becomes. Therefore, if the maximum value of the vibration is larger than a certain reference value, it is considered that a vibration exceeding the allowable limit is being generated.

According to this bearing inspection device, whether the bearing is defective or not is determined by checking if a vibration of the bearing is greater than the allowable limit. Accordingly, a defect of a bearing of a railroad main motor can be detected without disassembling the main motor.

In a third embodiment, the bearing inspection device is characterized by comprising a vibration detector enabled to output an electric signal indicating a vibration of said bearing, a vibration analysis unit for converting the electric signal output from said vibration detector into time-domain data to extract a crest factor which is obtained by dividing a maximum value of said vibration by an effective value of said vibration, and a determination unit for comparing said crest factor extracted by said vibration analysis unit when said main motor is rotationally driven at a predetermined specific revolution with a predetermined reference value to decide whether said bearing is defective or not from the result of comparison.

This bearing inspection device is constructed in the same manner, but utilizes the crest factor as criteria for determination. The crest factor represents the impact level of the vibrational waveform of the bearing itself. When the crest factor is greater than a certain reference value, it is considered that there is some defect in a bearing.

According to this bearing inspection device, whether a bearing is defective or not is determined by checking if a vibration generated from the bearing exceeds the allowable limit. Therefore, a defect of a bearing of a railroad main motor can be found without disassembling the main motor.

In a fourth embodiment, the bearing inspection device is characterized by comprising a vibration detector enabled to output an electric signal indicating a vibration of said bearing, a vibration analysis unit for converting the electric signal output from said vibration detector into frequency-domain data by applying waveform processing which eliminates a noise element caused by a vibration or other of some part other than the bearing and other waveform processing such as absolute value processing and envelope processing to the electric signal so as to extract an occupancy degree which is obtained by dividing a predetermined specific frequency element level by the sum total of all frequency element levels, and a determination unit for comparing said occupancy degree extracted by said vibration analysis unit when said main motor is rotationally driven at a predetermined specific revolution with a predetermined reference value to decide whether said bearing is defective or not from the result of comparison.

This bearing inspection device is constructed in the same manner, but utilizes an occupancy degree as criteria for judgment, and that a frequency analysis is carried out by the vibration analysis unit in order to calculate the occupancy degree.

The occupancy degree shows the proportion occupied by a certain specific frequency element in the overall vibration of a bearing. If a vibration is being generated at a specific cycle due to a defect of a part included in a bearing, the occupancy degree corresponding to the specific cycle becomes large. Accordingly, when the occupancy degree exceeds a certain reference value, it is considered that the vibration is being caused by some defect in a specific part of a bearing.

In this embodiment, said specific frequency element includes: (1) a frequency element intensively appearing in an electric signal which is measured when said main motor is rotationally driven at said specific revolution and to which envelope processing is applied under the condition where a defect exists in the outer ring of said bearing; (2) a frequency element intensively appearing in an electric signal which is measured when said main motor is rotationally driven at said specific revolution and to which envelope processing is applied under the condition where a defect exists in the inner ring of said bearing; (3) a frequency element intensively appearing in an electric signal which is measured when said main motor is rotationally driven at said specific revolution and to which envelope processing is applied under the condition where a defect exists in the rolling element of said bearing; (4) an frequency element corresponding to the rotational frequency of said main motor; and other elements. Hereinafter, the values obtained by dividing each sum of the frequency element levels (1) through (4) and their higher element levels by the total of all frequency element levels are referred to as 'outer ring occupancy degree', 'inner ring occupancy degree', 'rolling element occupancy degree', and 'rotational occupancy degree', respectively.

The outer ring occupancy degree becomes greater principally when there is a defect in the outer ring of the bearing. For example, this degree tends to be large if some defect due to electrocorrosion or other defect exists in the outer ring. The inner ring occupancy degree becomes greater mainly when the inner ring of the bearing has some defect. For example, this degree tends to be large if the inner ring has a bruise or other defect caused locally. The rolling element occupancy degree becomes higher generally when there is a defect in the rolling element of the bearing. This degree tends to be greater if the rolling element has a bruise or other defect caused locally. The rotational occupancy degree becomes larger when the raceway face of the bearing is worn out.

In any case, when these values exceeds the reference value, it is considered that a specific part of the bearing has some defect. Thus, according to this bearing inspection device, a defect of a bearing of a railroad main motor can be detected without disassembling the main motor since whether the bearing is defective or not is determined by checking if a vibration caused by a defect of a part included in the bearing is being generated.

The above-described four embodiments all relate to such a device as constructed for deciding whether a bearing is defective or not from a viewpoint of a vibration of a bearing. The devices of the next embodiments are, however, so designed as to make such determination in view of an element included in grease on a bearing.

More specifically, a fifth embodiment relates to a bearing inspection device used to inspect a bearing of a railroad main motor. This bearing inspection device is characterized by comprising a quantitative analysis unit enabled to measure a content of metal in grease sampled from said bearing, and a determination unit for comparing said content of metal measured by said quantitative analysis unit with a predetermined reference value to decide whether said bearing is defective or not from the result of comparison.

There is no limitation on the quantitative analysis unit if it can at least measure a content of metal included in grease. However, it is more preferable that this unit has as higher an analysis accuracy and a processing speed as possible. Considering this aspect, a preferable equipment may be, for example, a fluorescence X-ray analysis equipment. The determination unit performs various data processing based on the analysis data obtained from the quantitative analysis unit. This unit can be constructed with a known computer system, for example.

In the bearing inspection device thus constructed, the content of the metal in the grease sampled from the bearing is measured by the quantitative analysis unit. The metal element included in the grease increases as abrasion and electrocorrosion becomes greater in the bearing. Therefore, if the content of the metal in the grease exceeds a certain reference value, it is considered that abnormal abrasion or intensive electrocorrosion exists. The determination unit thus compares the content of the metal actually measured with the reference value, and determines whether said bearing is defective or not based on the result of the comparison. The content of metal in grease at the time of abrasion or electrocorrosion around the allowable limit is selected as a reference value, based on which it can be judged whether abrasion or electrocorrosion caused exceeds the allowable limit. The reference value may be a value statistically obtained from a number of samples, or may be a theoretical value obtained through analysis using a model.

According to this bearing inspection device, since whether a bearing is defective or not is determined by checking if the content of metal included in grease exceeds an allowable limit, a defect of a bearing of a railroad main motor can be detected without disassembling the main motor. Accordingly, the time and labor required for disassembling and assembling the main motor can be reduced, and damages given to a bearing part on disassembly and assembly can be prevented. Moreover, different from visual inspection, the problem that excessive abrasion substantially exists can be securely found.

A sixth embodiment relates to a bearing inspection device used to inspect a bearing of a railroad main motor. This bearing inspection device is characterized by comprising a quantitative analysis unit enabled to measure a content of metal in grease sampled from said bearing, a data memory allowed to store the content of the metal previously measured by said quantitative analysis unit, and a determination unit for comparing the sum of the content of the metal stored in said data memory means and a content of metal newly measured by said quantitative analysis unit with a predetermined reference value to decide whether said bearing is defective or not from the result of comparison.

This bearing inspection device is different in that the sum of the content of the metal previously measured and that newly measured is compared with the reference value. When there is rapid abrasion or intensive electrocorrosion at the time of inspection, the content of the metal newly measured may exceed the reference value immediately. However, when abrasion gradually increases during replacement of grease several times, there is a possibility that the content remains within the reference value. On the contrary, the sum of the content of the metal previously measured and that newly measured reflects the abrasion caused immediately after the beginning of use of the bearing till the time of measurement. Therefore, if the sum is greater than a certain reference value, it is supposed that the abrasion of the bearing having increased gradually has exceeded the allowable limit. The determination unit thus compares the above-mentioned sum with the reference value, and determines whether said bearing is defective or not based on the result of the comparison. The cumulative value of the content of the metal included in the grease on the bearing which is worn out till the limit of use is selected as the reference value, based on which it can be determined whether the bearing has reached the limit of use or not. The reference value may be a value statistically obtained from a number of samples, or a theoretical value obtained through analysis using a sample.

According to this bearing inspection device, since whether the bearing is defective or not is decided by checking if the above-mentioned sum exceeds the allowable limit, the limit of use of a bearing of a railroad main motor can be detected without disassembling the main motor.

In the sixth embodiment it is preferable that the device includes an updating means which updates the content of metal stored in said data memory means with said sum if it is determined that the bearing is not defective by said determination unit, as data are automatically accumulated in the data memory means every time inspection is conducted by the bearing inspection device.

The bearing inspection devices of the above-described embodiments may have their own structure independently, or may include structures of two or more embodiments.

When two or more inspections selected from the first through sixth inspections corresponding to the first through sixth embodiment are carried out, the comprehensive determination as 'defective' may be made from only a single inspection which shows a decision as 'defective', or from two or more inspections which all have results as 'defective'.

When two or more inspections are conducted, it is preferable that at least one inspection is selected from the first through the fourth inspections, and at least one from the fifth and the sixth inspections. Among the first through the fourth inspections, the first inspection is desirable from the viewpoint of the high detection rate of electrocorrosion. Also, the fourth inspection is preferable from the viewpoint of the excellent detection rate of damages caused locally such as bruise. Especially, if the above-mentioned inner ring occupancy degree and the rolling element degree are selected as parameters in the fourth inspection, the reference value can be easily set and more precise determination can be attained since the inspection results agree with the actual defects highly closely. The combination of the inspections may be selected in accordance with the objective of inspection or other conditions. Also, the comprehensive determination may be made from the results of plural inspections to which each weight is given. The direction corresponding to the determination as 'defective' may be not only that immediate replacement is required, but also that additional visual inspection is required.

BRIEF DESCRIPTION OF THE DRAWINGS

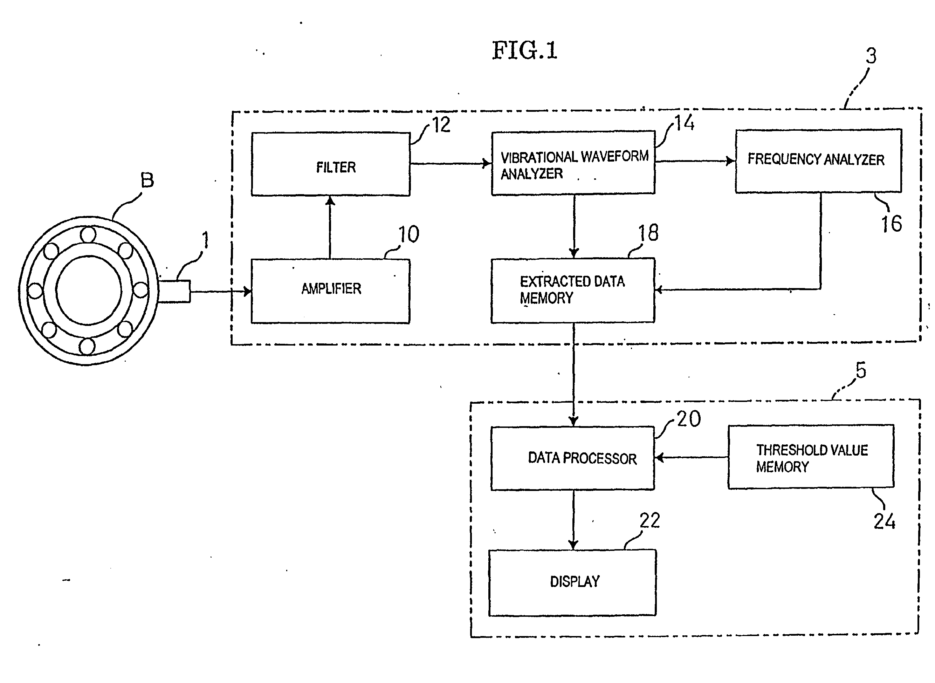

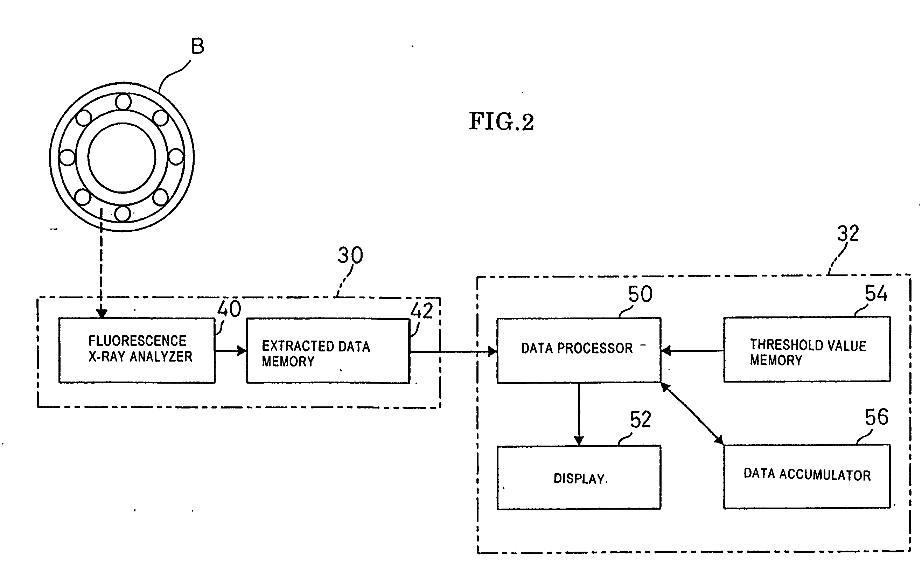

Figure 1 is a schematic view showing a preferable bearing inspection device for a railroad main motor according to this invention which can detect a defect of the bearing by examining a vibration of the bearing. Figure 2 is a schematic view showing a preferable bearing inspection device for a railroad main motor according to this invention which can detect a defect of the bearing by examining an element included in grease on the bearing.

BEST MODE OF PRACTICING THE INVENTION

An example of a bearing inspection device for railroad main motor according to the present invention is now described with reference to the accompanied drawings so as to explain the present invention in more detail.

Figure 1 is a schematic view showing a bearing inspection device enabled to detect a defect of a bearing by examining a vibration of the bearing.

The bearing inspection device is composed of a vibration detector 1, a vibration analysis unit 3, and a determination unit 5.

The vibration detector 1 is fixed to a bearing B provided in a railroad main motor. When a vibration of the bearing B is generated due to the rotational drive of the main motor, the detector 1 outputs an electric signal indicating this vibration. In this example, a piezoelectric vibration acceleration sensor which can measure a vibration acceleration has been selected as the vibration detector 1. The vibration detector 1 may be, however, a vibration acceleration sensor of a type other than the piezoelectric one, a vibration sensor of a velocity detection type or a displacement detection type. The electric signal output from the vibration detector 1 is input into the vibration analysis unit 3.

The vibration analysis unit 3 is a signal processing device which can analyze the waveform and the frequency spectrum of the vibration detected by the vibration detector 1. The vibration analysis unit 3 is composed of an amplifier 10 for amplifying the signal input from the vibration detector 1, a filter 12 for extracting the vibration of the bearing B by removing a noise element of the signal input from the amplifier 10, a vibrational waveform analyzer 14 for applying absolute value processing or envelope processing to the signal input from the filter 12 to extract the vibrational waveform emphasizing the vibration due to the defect of the bearing, a frequency analyzer 16 for converting the time-domain data obtained from the vibration waveform analyzer 14 to extract the frequency spectrum as the frequency-domain data, an extracted data memory 18 for storing each of the data extracted by the vibration waveform analyzer 14 or the frequency analyzer 16, and other parts. Each of the data stored in the extracted data memory 18 is supplied to the determination unit 5 as necessary.

The determination unit 5 can be constructed with a known computer system, for example. The determination unit 5 includes a data processor 20 for comparing the data stored in the extracted data memory 18 of the above-mentioned vibration analysis unit 3 with data as threshold values to determine whether the bearing B is defective or not based on the result of the comparison, a display 22 for displaying the determination result obtained from the data processor 20, and a threshold value memory 24 for storing data used as threshold values at the determination process performed at the above-mentioned data processor.

The determination unit 5 may have an additional function as a controller for controlling the function of the vibration analysis unit 3. Also, such a controller for controlling the vibration analysis unit 3 may be included within the vibration analysis unit 3 itself, from which only the necessary data are supplied to the determination unit 5.

Next, the operation of the bearing inspection device is now described.

First, the vibration detector 1 is attached to the bearing B, and the main motor is rotationally driven at a fixed revolution. In this example, the revolution of the main motor has been set at 1,400 rpm. The revolution of the main motor is preferably so set that the peaks of the frequency spectrum appearing in response to various defects described later overlap with each other as little as possible. The actual number of revolutions is changeable depending on a variety of factors such as the structure of the main motor.

Under this condition, the electric signal output from the vibration detector 1 is input into the vibration analysis unit 3. The vibration analysis unit 3 executes known signal processing at the amplifier 10, the filter 12, the vibrational waveform analyzer 14, and the frequency analyzer 16, and then converts the input electric signal into the vibrational waveform and the frequency spectrum of the bearing B. Next, the effective value, the maximum value (peak value), the crest factor (maximum value/effective value), and other values of the vibration are extracted from the data corresponding to the vibrational waveform, and those extracted values are then stored in the extracted data memory 18.

Since the frequency spectrum indicates a vibrational level of a specific frequency element, the vibration analysis unit 3 calculates the occupancy degree of the frequency element intensively appearing under the condition of the defective outer ring of the bearing (outer ring occupancy degree), the occupancy degree of the frequency element intensively appearing under the condition of the defective inner ring of the bearing (inner ring occupancy degree), the occupancy degree of the frequency element intensively appearing under the condition of the defective rolling element of the bearing (rolling element occupancy degree), and the occupancy degree of the frequency element corresponding to the rotational frequency (revolution per second) of the main motor. The values thus obtained are stored in the extracted data memory 18.

In the present device, the frequency fo intensively appearing under the condition of the defective outer ring of the bearing, the frequency fi intensively appearing under the condition of the defective inner ring of the bearing, and the frequency fb intensively appearing under the condition of the defective rolling element of the bearing are calculated according to the following equations:

$$ fo = \frac{fr}{2}\left(1 - \frac{d}{D}\cos\alpha\right)z $$

$$ fi = \frac{fr}{2}\left(1 + \frac{d}{D}\cos\alpha\right)z $$

$$ fb = \frac{fr}{2}\cdot\frac{D}{d}\left[1 - \left(\frac{d}{D}\right)^2\cos^2\alpha\right] $$

In the above equations, fr is the rotational frequency (Hz) of the main motor, and is arbitrarily set from the viewpoint described above; D is the pitch circle diameter (mm) of the bearing, i.e. the diameter of the circular track drawn by the rotational center of the rolling element as a result of the rolling of the rolling element; $\alpha$ is the contact angle (degree), i.e. the angle formed between the axis as the rotational center of the rolling element and the axis as the rotational center of the inner ring; and z is the number of the rolling elements.

Each occupancy degree is obtained by dividing the value of the vibrational level at each frequency described above (the height of the frequency spectrum appearing at the position corresponding to each frequency) by the sum total of the vibrational levels of all frequencies (the whole area of the frequency spectrums).

As aforementioned, the effective value, the maximum, the crest factor, the outer ring occupancy degree, the inner ring occupancy degree, the rolling element occupancy degree, and the rotational occupancy degree obtained at the vibration analysis unit 3 are read out by the determination unit 5. The data processor 20 of the determination unit 5 compares each measured value supplied from the vibration analysis unit 3 with the reference value stored at the threshold value memory 24.

The reference values are determined based on the graphed correlation between the judgment results of visual inspections and the detection values obtained through inspections as above. A number of samples are inspected visually and in the manner described as above so as to obtain the correlation. The reference values thus determined are stored in the threshold value memory 24.

If any of the various measurement values supplied exceeds the reference values, the data processor 20 of the determination unit 5 determines that there is an abnormal condition, and indicates a warning showing the condition on the display 22. Therefore, the inspector in charge can determine whether the bearing B is defective or not from the result of the determination indicated on the display 22 of the determination unit 5, and thus can find the defect of the bearing B without carrying out disassembly inspection of the main motor.

Next, another example of a bearing inspection device for a railroad main motor according to the present invention is now described.

Figure 2 is a schematic view showing a preferable bearing inspection device for a railroad main motor according to this invention, which is enabled to find a defect of a bearing by examining an element included in grease on the bearing.

This bearing inspection device is composed of a quantitative analysis unit 30 and a determination unit 32.

The quantitative analysis unit 30 is a device which can analyze a content of a specific element included in grease sampled from the bearing B. The quantitative analysis unit 30 includes a fluorescence X-ray analyzer 40 for conducting quantitative analysis by means of fluorescence X-ray analysis, an extracted data memory 42 for storing various data extracted at the fluorescence X-ray analyzer 40, and other parts. Each of the data stored in the extracted data memory 42 is supplied to the determination unit 32 as necessary.

The determination unit 32 can be constructed with a known computer system, for example. The determination unit 32 is composed of a data processor 50 for comparing the data stored in the extracted data memory 42 of the above-mentioned quantitative analysis unit 30 with data as threshold values to determine whether the bearing B is defective or not from the result of the comparison, a display 52 for displaying the result of the determination made at the data processor 50, a threshold value memory 54 for storing data used as threshold values at the determination process of the above-mentioned data processor 50, a data accumulator 56 enabled to store maintenance data corresponding to a plurality of bearings B and to store, as one of the maintenance data, the cumulative value of the content of the metal previously measured by the above-mentioned quantitative analysis unit 30, and other parts.

The determination unit 32 may have an additional function as a controller for controlling the function of the quantitative analysis unit 30. Such a controller for controlling the quantitative analysis unit 30 may be included within the quantitative analysis unit 30 itself, from which only necessary data are supplied to the determination unit 32.

Next, the operation of the bearing inspection device is explained.

First, a small amount of grease (approximately 0.1g) is sampled from the bearing B, and is placed on the quantitative analysis unit 30. The quantitative analysis unit 30 can be constructed with a variety of devices available on the market. The procedures for the analysis operation follow those for each device included.

The quantitative analysis unit 30 performs a known fluorescence X-ray analysis at the fluorescence X-ray analyzer 40, extracts the contents of iron, copper and other metals included in grease, and stores the contents in the extracted data memory 42. It should be noted herein that the contents of iron and copper are especially extracted because each part of the bearing B is formed from steel or copper alloy. If each part of the bearing B is manufactured with alloys including a large amount of other metal materials (such as aluminum and titanium), the contents of such metals may be examined.

As aforementioned, the contents of iron and copper obtained at the quantitative analysis unit 30 are read out by the determination unit 32. The data processor 50 of the determination unit 32 compares each value measured at the quantitative analysis unit 30 with the reference values stored in the threshold value memory 54.

The reference values are determined based on the graphed correlation between the judgment results of visual inspection and the detection values obtained through the above-mentioned inspection. In order to obtain the correlation, a number of samples are inspected visually and by the method as above. The reference values thus determined are stored in the threshold value memory 54.

The data processor 50 of the determination unit 32 decides that there is an abnormal condition if at least the cumulative value of the content of either iron or copper supplied exceeds the reference value, and indicates a warning showing the condition on the display 52. Therefore, the inspector in charge can determine whether the bearing is defective or not from the determination result indicated on the display 52 of the determination unit 32, and thus can find a defect of the bearing without carrying out disassembly inspection for the main motor.

Furthermore, the data processor 50 of the determination unit 32 adds the measured values obtained from the quantitative analysis unit 30 to the cumulative values accumulated in the data accumulator 56, and compares the sum of these values with the reference values stored in the threshold value memory 54. The data accumulator 56 includes maintenance data corresponding to a plurality of bearings. Therefore, the inspector in charge inputs a identifier for specifying the bearing B subject to inspection into the determination unit 32 in advance. The data processor 50 thus specifies the bearing B based on the identifier input in advance, and reads out appropriate data from the data accumulator 56.

The data processor 50 of the determination unit 32 determines that there is an abnormal condition if at least the cumulative value of the content of either iron or copper exceeds the reference value, and indicates a warning showing the condition on the display 52. Therefore, the inspector in charge can decide whether the bearing is defective or not from the determination result shown on the display 52 of the determination unit 32, and thus can find a defect of the bearing B without carrying out disassembly inspection for the main motor.

An example of the bearing inspection device according to the present invention has been described. However, it is not intended that the present invention is limited to the above-mentioned specific example.

For example, according to the example shown above, two types of bearing inspection devices have been described separately. However, since the determination units 5 and 32 included in each bearing inspection device are both constructed with a computer system or other device having a similar structure, the data from the vibration analysis unit 3 and from the quantitative analysis unit 30 may be input into a common determination unit so that a defect of a bearing can be detected comprehensively based on both data. In other cases, the comprehensive determination can be made by either the determination unit 5 or 32 through LAN connection therebetween without unifying the determination units 5 and 32 into a common determination unit. Also, the comprehensive determination may be made by another computer system which is connected through LAN connection.

Additionally, according to the description as above, each bearing inspection device determines that a bearing is defective if there is an abnormal condition in any one of the inspection items. However, since the determination accuracy changes depending on how the reference values are set and also on what the item is, appropriate weights may be given by changing the reference values at a rate of several to dozens of percentage or the determination as 'defective' may be made if abnormal conditions in two or more items are found.

INDUSTRIAL APPLICABILITY

As aforementioned, a bearing inspection device for a railroad main motor according to the present invention can detect a defect of a bearing of a railroad main motor without disassembling the main motor. Therefore, the time and labor required for disassembling and assembling the main motor are reduced, damages given to the bearing part on disassembly or assembly are prevented, and as a result the reduction of work amount, a higher work speed and an enhanced work reliability at a railroad maintenance plant are attained.

**Claims**

1. A bearing inspection device used to inspect a bearing of a railroad main motor, comprising:

   a vibration detector (1) and a vibration analysis unit (3) to extract a certain value of vibration of the bearing, **characterised in that**, the bearing inspection device further comprises a quantitative analysis unit (30) enabled to measure a content of metal in grease sampled from said bearing and a determination unit (5, 32) determining whether there is a defect of the bearing based on the extracted value of vibration and the content of metal in grease.

2. The bearing inspection device according to claim 1, wherein the vibration analysis unit (3) is adapted to extract the certain value of vibration of the bearing at a predetermined revolution of the railroad main motor.

3. The bearing inspection device according to claim 1 or 2, wherein the revolution of the railroad main motor is so set that the peaks of the frequency spectrum appearing in response to various defects overlap with each other as little as possible.

4. The bearing inspection device according to one of the preceding claims, wherein the determination unit (5) is adapted to compare said certain value extracted by said vibration analysis unit (3) when said railroad main motor is rotationally driven at a predetermined specific revolution with a predetermined reference value.

5. The bearing inspection device according to one of the preceding claims, wherein the extracted certain value of vibration of the bearing is an effective value, or a maximum value, or a crest factor, which is obtained by dividing the maximum value of said vibration by the effective value of said vibration, or an occupancy degree, which is obtained by dividing a level of a predetermined specific frequency element by total levels of all frequency elements.

6. The bearing inspection device according to claim 5, wherein said predetermined specific frequency element intensively appears when said main motor is rotationally driven at said specific revolution under the condition that there is a defect in an outer ring of said bearing,

7. The bearing inspection device according to claim 5, wherein said predetermined specific frequency element intensively appears when said main motor is rotationally driven at said specific revolution under the condition that there is a defect in an inner ring of said bearing.

8. The bearing inspection device according to claim 5, wherein said predetermined specific frequency element intensively appears when said main motor is rotationally driven at said specific revolution under the condition that there is a defect in a rolling element of said bearing.

9. The bearing inspection device according to claim 5, wherein said predetermined specific frequency element corresponds to a rotational frequency of said main motor.

10. The bearing inspection device according to one of the preceding claims, wherein the determination unit (32) is adapted to compare said content of metal measured by said quantitative analysis unit (30) with a predetermined reference value.

11. The bearing inspection device according to one of the preceding claims, wherein the determination unit (32) comprises a data memory enabled to store the content of metal.

12. The bearing inspection device according to claim 11, wherein the determination unit (32) is adapted to compare the sum of the content of metal stored in said data memory means and a content of metal newly measured by said quantitative analysis unit with a predetermined reference value.

13. The bearing inspection device according to claim 11 or 12, comprising an updating means for updating the content of metal stored in said data memory means.

14. Method for wear inspection of a bearing device of a railroad main motor, comprising:

detecting a vibration of the bearing,
analysing the vibration to extract a certain value of vibration of the bearing, **characterized by** measuring a content of metal in grease sampled from said bearing,
determining whether there is a defect of the bearing based on the extracted value of vibration and the content of metal in grease.

**Patentansprüche**

1. Lagerprüfvorrichtung zur Prüfung eines Lagers eines Eisenbahnhauptmotors, umfassend:

einen Vibrationsdetektor (1) und eine Vibrationsanalyseeinheit (3) zur Ermittlung eines bestimmten Vibrationswerts des Lagers, **dadurch**

**gekennzeichnet, dass** die Lagerprüfvorrichtung des weiteren eine Einheit (30) zur quantitativen Analyse umfasst, die geeignet ist, einen Metallgehalt in Fett zu messen, das vom Lager entnommen wurde, und eine Bestimmungseinheit (5, 32), die auf Basis des ermittelten Vibrationswerts und des Metallgehalts im Fett bestimmt, ob ein Lagerdefekt vorliegt.

2. Lagerprüfvorrichtung gemäß Anspruch 1, wobei die Vibrationsanalyseeinheit (3) geeignet ist, den bestimmten Vibrationswert des Lagers bei einer bestimmten Drehzahl des Eisenbahnhauptmotors zu ermitteln.

3. Lagerprüfvorrichtung gemäß Anspruch 1 oder 2, wobei die Drehzahl der Eisenbahnhauptmotors so eingestellt ist, dass die Spitzen des Frequenzspektrums, die als Reaktion auf unterschiedliche Defekte erscheinen, einander so wenig wie möglich überlappen.

4. Lagerprüfvorrichtung gemäß einem der vorangehenden Ansprüche, wobei die Bestimmungseinheit (5) geeignet ist, den bestimmten Wert, der von der Vibrationsanalyseeinheit (3) ermittelt wird, wenn der Eisenbahnhauptmotor mit einer bestimmten Drehzahl rotierend angetrieben wird, mit einem bestimmten Referenzwert zu vergleichen.

5. Lagerprüfvorrichtung gemäß einem der vorangehenden Ansprüche, wobei der ermittelte bestimmte Vibrationswert des Lagers ein Effektivwert oder ein Maximalwert oder ein Scheitelfaktor ist, der durch Dividieren des Maximalwerts der Vibration durch den Effektivwert der Vibration ermittelt wird, oder ein Belegungsgrad, der durch Dividieren eines vorher bestimmten, spezifischen Frequenzelements durch die Gesamtwerte aller Frequenzelemente erreicht wird.

6. Lagerprüfvorrichtung gemäß Anspruch 5, wobei das vorher bestimmte, spezifische Frequenzelement intensiv erscheint, wenn der Hauptmotor mit der spezifischen Drehzahl unter der Bedingung, dass ein Defekt in einem Außenring des Lagers vorliegt, rotierend angetrieben wird.

7. Lagerprüfvorrichtung gemäß Anspruch 5, wobei das vorher bestimmte, spezifische Frequenzelement intensiv erscheint, wenn der Hauptmotor mit der spezifischen Drehzahl unter der Bedingung, dass ein Defekt in einem Innenring des Lagers vorliegt, rotierend angetrieben wird.

8. Lagerprüfvorrichtung gemäß Anspruch 5, wobei das vorher bestimmte, spezifische Frequenzelement intensiv erscheint, wenn der Hauptmotor mit der spezifischen Drehzahl unter der Bedingung, dass ein Defekt in einem Wälzelement des Lagers vorliegt, rotierend angetrieben wird.

9.  Lagerprüfvorrichtung gemäß Anspruch 5, wobei das vorher bestimmte, spezifische Frequenzelement einer Rotationsfrequenz des Hauptmotors entspricht.

10. Lagerprüfvorrichtung gemäß einem der vorangehenden Ansprüche, wobei die Bestimmungseinheit (32) geeignet ist, den von der Einheit (30) zur quantitativen Analyse gemessenen Metallgehalt mit einem bestimmten Referenzwert zu vergleichen.

11. Lagerprüfvorrichtung gemäß einem der vorangehenden Ansprüche, wobei die Bestimmungseinheit (32) einen Datenspeicher umfasst, der geeignet ist, den Metallgehalt zu speichern.

12. Lagerprüfvorrichtung gemäß Anspruch 11, wobei die Bestimmungseinheit (32) geeignet ist, die Summe des im Datenspeichermittel gespeicherten Metallgehalts und eines von der Einheit zur quantitativen Analyse neu gemessenen Metallgehalts mit einem vorher bestimmten Referenzwert zu vergleichen.

13. Lagerprüfvorrichtung gemäß Anspruch 11 oder 12, die ein Aktualisierungsmittel zur Aktualisierung des im Datenspeichermittel gespeicherten Metallgehalts umfasst.

14. Verfahren zur Verschleißprüfung einer Lagervorrichtung eines Eisenbahnhauptmotors, umfassend:

    Ermittlung einer Vibration des Lagers;
    Analyse der Vibration, um einen bestimmten Vibrationswert des Lagers zu ermitteln, **gekennzeichnet durch**
    das Messen eines Metallgehalts in einem dem Lager entnommenen Fett;
    Bestimmen, ob ein Defekt des Lagers auf Basis des ermittelten Vibrationswerts und des Metallgehalts im Fett vorliegt.

## Revendications

1.  Dispositif d'inspection de palier utilisé pour inspecter un palier d'un moteur principal de véhicule ferroviaire, comprenant :

    un détecteur de vibrations (1) et une unité d'analyse de vibrations (3) pour extraire une valeur certaine de vibration du palier,

    **caractérisé en ce que**, le dispositif d'inspection de palier comprend de plus une unité d'analyse quantitative (30) permettant de mesurer une teneur de métal dans la graisse prélevée dudit palier et une unité de détermination (5,32) déterminant s'il existe un défaut du palier en se basant sur la valeur de vibration extraite et sur la teneur de métal dans la graisse.

2.  Dispositif d'inspection de palier selon la revendication 1, dans lequel l'unité d'analyse de vibrations (3) est conçue pour extraire la valeur certaine de vibration du palier à une rotation prédéterminée du moteur principal du véhicule ferroviaire.

3.  Dispositif d'inspection de palier selon la revendication 1 ou 2, dans lequel la rotation du moteur principal du véhicule ferroviaire est réglée de sorte que les pics du spectre de fréquences apparaissent en réponse aux différents défauts se chevauchent les uns avec les autres aussi peu que possible.

4.  Dispositif d'inspection de palier selon l'une des revendications précédentes, dans lequel l'unité de détermination (5) est conçue pour comparer ladite valeur certaine extraite par ladite unité d'analyse de vibrations (3) quand ledit moteur principal du véhicule ferroviaire est entraîné de façon rotative à une rotation spécifique prédéterminée avec une valeur de référence prédéterminée.

5.  Dispositif d'inspection de palier selon l'une des revendications précédentes, dans lequel la valeur certaine extraite de vibration du palier est une valeur efficace, ou une valeur maximale, ou un facteur de crête, qui est obtenu en divisant la valeur maximale de ladite vibration par la valeur efficace de ladite vibration, ou un degré d'occupation, qui est obtenu en divisant un niveau d'un élément de fréquence spécifique prédéterminé par des niveaux totaux de tous les éléments de fréquence.

6.  Dispositif d'inspection de palier selon la revendication 5, dans lequel ledit élément de fréquence spécifique prédéterminé apparaît de façon intensive lorsque ledit moteur principal est entraîné de façon rotative à ladite rotation spécifique à la condition qu'il y ait un défaut dans une bague externe dudit palier.

7.  Dispositif d'inspection de palier selon la revendication 5, dans lequel ledit élément de fréquence spécifique prédéterminé apparaît de façon intensive lorsque ledit moteur principal est entraîné de façon rotative à ladite rotation spécifique à la condition qu'il y ait un défaut dans une bague interne dudit palier.

8.  Dispositif d'inspection de palier selon la revendication 5, dans lequel ledit élément de fréquence spécifique prédéterminé apparaît de façon intensive lorsque ledit moteur principal est entraîné de façon rotative à ladite rotation spécifique à la condition qu'il y ait un défaut dans un élément roulant dudit palier.

9. Dispositif d'inspection de palier selon la revendication 5, dans lequel ledit élément de fréquence spécifique prédéterminé correspond à une fréquence de rotation dudit moteur principal.

10. Dispositif d'inspection de palier selon l'une des revendications précédentes, dans lequel l'unité de détermination (32) est conçue pour comparer ladite teneur de métal mesurée par ladite unité d'analyse quantitative (30) avec une valeur de référence prédéterminée.

11. Dispositif d'inspection de palier selon l'une des revendications précédentes, dans lequel l'unité de détermination (32) comprend une mémoire de données permettant de stocker la teneur de métal.

12. Dispositif d'inspection de palier selon la revendication 11, dans lequel l'unité de détermination (32) est conçue pour comparer la somme de la teneur de métal stockée dans lesdits moyens de mémoire de données et une teneur de métal récemment mesurée par ladite unité d'analyse quantitative avec une valeur de référence prédéterminée.

13. Dispositif d'inspection de palier selon la revendication 11 ou 12, comprenant des moyens de mise à jour pour mettre à jour la teneur de métal stockée dans lesdits moyens de mémoire de données.

14. Procédé pour inspecter l'usure d'un dispositif de palier d'un moteur principal de véhicule ferroviaire, consistant à :

détecter une vibration du palier,
analyser la vibration pour extraire une valeur certaine de vibration du palier, **caractérisé par** mesurer une teneur de métal dans de la graisse prélevée à partir dudit palier,
déterminer s'il existe un défaut du palier en se basant sur la valeur extraite de vibration et la teneur de métal dans la graisse.

## FIG.1

EP 0 982 579 B1

B

FIG.2

EP 0 982 579 B1

```
                                                    ┌─────────── 32
        ┌────── 30                                  ┊
        ┊                                           ┊
┌───────┊──────────────────────────┐   ┌───────────┊───────────────────────────────┐
┊       40              42          ┊   ┊      50                        54          ┊
┊ ┌──────────────┐  ┌──────────────┐┊   ┊ ┌──────────────┐      ┌──────────────────┐┊
┊ │ FLUORESCENCE │  │              │┊   ┊ │              │◄─────│                  │┊
┊ │ X-RAY        │─►│ EXTRACTED    │┊──►┊ │ DATA         │      │ THRESHOLD VALUE  │┊
┊ │ ANALYZER     │  │ DATA MEMORY  │┊   ┊ │ PROCESSOR    │      │ MEMORY           │┊
┊ └──────────────┘  └──────────────┘┊   ┊ └──────┬───────┘      └──────────────────┘┊
└───────────────────────────────────┘   ┊        │         ▲                        ┊
                                         ┊        ▼          ╲       56               ┊
                                         ┊     52 ┌────────┐  ╲  ┌──────────────────┐┊
                                         ┊        │        │   ▼ │                  │┊
                                         ┊        │ DISPLAY│     │ DATA ACCUMULATOR │┊
                                         ┊        └────────┘     └──────────────────┘┊
                                         └───────────────────────────────────────────┘
```